# EUROPEAN PATENT APPLICATION

(11) **EP 4 815 594 A1**
(43) Date of publication of application: **30.09.2026**
(21) Application number: 24905851.2
(22) Date of filing: 30.10.2024
(51) Int. Cl.: H04W 72/0446

(54) **COMMUNICATION METHOD AND COMMUNICATION APPARATUS**

(30) Priority: 20.12.2023 CN 202311758083
(71) Applicant: Huawei Technologies Co., Ltd., Shenzhen, Guangdong 518129 (CN)
(72) Inventor: GUO, Zhiheng, Shenzhen, Guangdong 518129 (CN); HOU, Hailong, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2024/128316
(87) International publication number: WO 2025/130363

(57) **Abstract**

This application provides a communication method and apparatus. The method includes: sending a first synchronization signal/physical broadcast channel block SSB on a first time-frequency resource; and sending a second SSB on a second time-frequency resource, where the first SSB and the second SSB belong to a first synchronization signal SS burst set, the first time-frequency resource includes a first time-domain resource and a first frequency-domain resource, the second time-frequency resource includes a second time-domain resource and a second frequency-domain resource, the first time-domain resource is the same as the second time-domain resource, and the first frequency-domain resource is different from the second frequency-domain resource.

## Description

This application claims priority to Chinese Patent Application No. 202311758083.6, filed with the China National Intellectual Property Administration on December 20, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

In a new radio (new radio, NR) system, during access to a base station, a terminal performs time and frequency synchronization with the base station and obtains broadcast information through a synchronization signal/physical broadcast channel block (synchronization signal/PBCH block, SSB). To improve coverage performance of the SSB, the base station repeatedly transmits the SSB in different directions on different beams. In a beam direction, a received power of the SSB at the terminal can be higher due to a higher concentration of energy, thereby improving the coverage performance of the SSB. An SSB set in one beam sweep is referred to as a synchronization signal burst set (SS burst set).

A maximum quantity of SSBs in an SS burst set varies across different frequency bands. For frequency bands below 3 gigahertz (gigahertz, GHz), an SS burst set includes a maximum of four SSBs. For frequency bands between 3 GHz and 6 GHz, an SS burst set includes a maximum of eight SSBs. However, at higher frequencies such as 6 GHz and the like, more broadcast beams are used for cell coverage, where one SSB is sent on one broadcast beam for access by a terminal. Currently, the defined quantity of SSBs in an SS burst set is improper. Therefore, how to design the maximum quantity of SSBs in an SS burst set becomes an urgent problem to be resolved.

### SUMMARY

This application provides a communication method, which expands a quantity of SSBs included in an SS burst set to increase a quantity of SSBs in a cell, thereby providing synchronization resources for more broadcast beams.

According to a first aspect, a communication method is provided. The method may be performed by a network device, or may be performed by a chip, a circuit, or the like. This is not limited in this application.

The communication method includes: sending a first synchronization signal/physical broadcast channel block SSB on a first time-frequency resource; and sending a second SSB on a second time-frequency resource, where the first SSB and the second SSB belong to a first synchronization signal SS burst set, the first time-frequency resource includes a first time-domain resource and a first frequency-domain resource, the second time-frequency resource includes a second time-domain resource and a second frequency-domain resource, the first time-domain resource is the same as the second time-domain resource, and the first frequency-domain resource is different from the second frequency-domain resource.

Based on the foregoing technical solution, in an example in which an entity for performing the communication method is a network device, after determining time-frequency resources respectively corresponding to a plurality of SSBs included in the first SS burst set, the network device may send the SSBs on the corresponding time-frequency resources. Specifically, the plurality of SSBs in the first SS burst set include the first SSB and the second SSB, the time-domain resource of the first time-frequency resource corresponding to the first SSB is the same as the time-domain resource of the second time-frequency resource corresponding to the second SSB, and the frequency-domain resource of the first time-frequency resource is different from the frequency-domain resource of the second time-frequency resource. It may be understood that a plurality of SSBs can be sent on a same time-domain resource, that is, SSB transmission is implemented in a frequency division manner. In this way, a quantity of SSBs in an SS burst set is expanded, thereby providing more SSBs and increasing a quantity of SSBs in a cell. As a result, synchronization resources can be provided for more broadcast beams, thereby achieving an enhanced cell coverage capability.

With reference to the first aspect, in some implementations of the first aspect, the method further includes: sending a third SSB on a third time-frequency resource; and sending a fourth SSB on a fourth time-frequency resource, where the third SSB and the fourth SSB belong to the first synchronization signal burst set, the third time-frequency resource includes a third time-domain resource and a third frequency-domain resource, the fourth time-frequency resource includes a fourth time-domain resource and a fourth frequency-domain resource, the third time-domain resource is the same as the fourth time-domain resource, and the third frequency-domain resource is different from the fourth frequency-domain resource.

Based on the foregoing technical solution, the first SS burst set further includes the third SSB and the fourth SSB. Transmission of the third SSB and the fourth SSB and transmission of the first SSB and the second SSB are performed in a time division manner. In other words, the time-domain resources corresponding to the third SSB and the fourth SSB are different from the time-domain resources corresponding to the first SSB and the second SSB. It may be understood that this technical solution still supports transmission of a plurality of SSBs in a time division manner, thereby improving backward compatibility of the solution.

With reference to the first aspect, in some implementations of the first aspect, the first time-domain resource is a first orthogonal frequency division multiplexing (orthogonal frequency division multiplexing, OFDM) symbol, and the first orthogonal frequency division multiplexing symbol is in a first slot.

With reference to the first aspect, in some implementations of the first aspect, the third time-domain resource is a second orthogonal frequency division multiplexing OFDM symbol, and the second orthogonal frequency division multiplexing symbol is in the first slot.

Based on the foregoing technical solution, SSBs on a same time-domain resource may be on a same OFDM symbol. For example, the time-domain resource of the first time-frequency resource corresponding to the first SSB and the time-domain resource of the second time-frequency resource corresponding to the second SSB may be the first OFDM symbol in the first slot. In this technical solution, an existing time unit granularity corresponding to a time-domain resource of an SSB may be reused, thereby eliminating a need to define a new time unit granularity. This reduces complexity.

With reference to the first aspect, in some implementations of the first aspect, the first SSB includes a first physical broadcast channel PBCH, the second SSB includes a second PBCH, the first PBCH corresponds to a first demodulation reference signal DMRS sequence, the second PBCH corresponds to a second DMRS sequence, and the first DMRS sequence is the same as the second DMRS sequence.

Based on the foregoing technical solution, DMRS sequences corresponding to PBCHs of SSBs on a same time-domain resource may be the same, thereby eliminating a need to design different DMRS sequences for the PBCHs of the SSBs on the same time-domain resource. This reduces resource overheads of determining the DMRS sequences.

With reference to the first aspect, in some implementations of the first aspect, the first SSB includes the first physical broadcast channel PBCH, the second SSB includes the second PBCH, the first PBCH includes first indication information, the second PBCH includes second indication information, the first indication information indicates the first SSB, and the second indication information indicates the second SSB.

Based on the foregoing technical solution, SSBs on a same time-domain resource are distinguished by indication information carried in PBCHs, so that the terminal device can identify the SSBs based on the indication information carried in the PBCHs in the SSBs. For example, when a 5G terminal device and a terminal device in a future communication system share a spectrum, the 5G terminal device and the terminal device in the future communication system can identify SSBs based on indication information in PBCHs and determine corresponding deployed SSBs, thereby eliminating a need to deploy respective SSB signals. This reduces common overheads of a cell, and improves spectrum utilization.

With reference to the first aspect, in some implementations of the first aspect, the first indication information includes a first index, the first index indicates the first SSB, the second indication information includes a second index, and the second index indicates the second SSB.

With reference to the first aspect, in some implementations of the first aspect, the first indication information is indicated by a first bit in the first PBCH, the second indication information is indicated by a second bit in the second PBCH, a value of the first bit is different from a value of the second bit, the first bit includes at least one bit, and the second bit includes at least one bit.

With reference to the first aspect, in some implementations of the first aspect, the first bit is in a first field in the first PBCH, the second bit is in a second field in the second PBCH, the first field includes a choice field or a reserved field of the first PBCH, and the second field includes a choice field or a reserved field of the second PBCH.

Based on the foregoing technical solution, the indication information used to distinguish between the SSBs on the same time-domain resource may be at least one bit in a field in the PBCH. The field in the PBCH includes, but is not limited to, a choice (choice) field, a spare (spare) field, a reserved (reserved) field, or the like in the PBCH. In other words, information indicating the SSB may be carried in different fields in the PBCH, thereby improving flexibility of the solution.

With reference to the first aspect, in some implementations of the first aspect, the first synchronization signal burst set includes 16 SSBs, the 16 SSBs are sequentially numbered from 0 to 15, and frequency-domain resource of resources corresponding to two SSBs with a number difference of 8 are the same.

According to a second aspect, a communication method is provided. The method may be performed by a terminal device, or may be performed by a chip, a circuit, or the like. This is not limited in this application.

The communication method includes: receiving a first synchronization signal/physical broadcast channel block SSB on a first time-frequency resource; and receiving a second SSB on a second time-frequency resource, where the first SSB and the second SSB belong to a first synchronization signal SS burst set, the first time-frequency resource includes a first time-domain resource and a first frequency-domain resource, the second time-frequency resource includes a second time-domain resource and a second frequency-domain resource, the first time-domain resource is the same as the second time-domain resource, and the first frequency-domain resource is different from the second frequency-domain resource.

For example, for descriptions of time-frequency resources respectively corresponding to a plurality of SSBs included in the first SS burst set in the second aspect, refer to the descriptions of the time-frequency resources respectively corresponding to the plurality of SSBs included in the first SS burst set in the first aspect. Details are not described herein again. In addition, for descriptions of a relationship between the first time-frequency resource corresponding to the first SSB and the second time-frequency resource corresponding to the second SSB in the second aspect, refer to those in the first aspect. Details are not described herein again.

For technical effects of the method in the second aspect and the possible designs of the second aspect, refer to the technical effects in the first aspect and the possible designs of the first aspect.

According to a third aspect, a communication apparatus is provided. The communication apparatus is configured to perform the method according to the first aspect or any one of the implementations of the first aspect. Specifically, the communication apparatus includes a processor and a memory. The memory is configured to store a computer program. The processor is configured to invoke the computer program from the memory and run the computer program, to enable the communication apparatus to perform the method according to the first aspect or any one of the implementations of the first aspect.

In an implementation, the communication apparatus is a network device, and the communication apparatus includes a transceiver unit and a processing unit. In this case, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus may be a chip, a chip system, or a circuit in a network device, and the communication apparatus may include a transceiver unit and a processing unit. In this case, the transceiver unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a fourth aspect, a communication apparatus is provided. The communication apparatus is configured to perform the method according to the second aspect or any one of the implementations of the second aspect. Specifically, the communication apparatus includes a processor and a memory. The memory is configured to store a computer program. The processor is configured to invoke the computer program from the memory and run the computer program, to enable the communication apparatus to perform the method according to the second aspect or any one of the implementations of the second aspect.

In an implementation, the communication apparatus is a terminal device, and the communication apparatus includes a transceiver unit and a processing unit. In this case, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device, and the communication apparatus may include a transceiver unit and a processing unit. In this case, the transceiver unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a fifth aspect, a computer-readable storage medium is provided. The computer-readable storage medium stores a computer program. When the computer program is run, the method according to the first aspect, the second aspect, or any one of the implementations of the first aspect or the second aspect is performed.

According to a sixth aspect, a computer program product including instructions is provided. When the computer program product is run, the method according to the first aspect, the second aspect, or any one of the implementations of the first aspect or the second aspect is performed.

According to a seventh aspect, a chip is provided. The chip includes a processor and a communication interface. The processor reads instructions through the communication interface, to perform the method according to the first aspect, the second aspect, or any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to the first aspect, the second aspect, or any one of the implementations of the first aspect or the second aspect.

According to an eighth aspect, a communication system is provided, including the communication apparatus according to the third aspect and the communication apparatus according to the fourth aspect.

According to a ninth aspect, a computer program is provided. When the computer program is run, the method according to the first aspect, the second aspect, or any one of the implementations of the first aspect or the second aspect is performed.

### BRIEF DESCRIPTION OF DRAWINGS

FIG. 1 is a diagram of a communication system to which this application is applicable;
FIG. 2 is a diagram of a structure of an SSB;
FIG. 3 is a diagram of a beam sweeping-based SSB transmission process;
FIG. 4 is a diagram of candidate time-domain positions of SSBs in an SS burst set;
FIG. 5 is a schematic flowchart of a communication method according to an embodiment of this application;
FIG. 6 is a diagram of resource allocation within an SS burst set according to an embodiment of this application;
FIG. 7 is a block diagram of a communication apparatus according to an embodiment of this application;
FIG. 8 is a diagram of another communication apparatus according to an embodiment of this application; and
FIG. 9 is a diagram of a chip system according to an embodiment of this application.

### DESCRIPTION OF EMBODIMENTS

For ease of understanding of embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, but is not limited to, one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

Second, "at least one" in this application means one or more, and "a plurality of" means two or more. In addition, in embodiments of this application, "first", "second", and various numbers (for example, "#1" and "#2") are merely used for differentiation for ease of description, and are not intended to limit the scope of embodiments of this application. The sequence numbers in the following processes do not mean an execution sequence. The execution sequence of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, the terms such as "S510" and "S520" are merely identifiers for ease of description, and do not limit a sequence of performing steps.

Third, in this application, the term such as "example" or "for example" represents providing an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a related concept in a specific manner.

Fourth, "stored" in embodiments of this application may mean being stored in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fifth, "protocols" in embodiments of this application may be standard protocols in the communication field, for example, may include an LTE protocol, an NR protocol, and a related protocol applied to a future communication system. This is not limited in this application.

Sixth, in embodiments of this application, "in a case in which", "when", and "if" may be interchangeably used sometimes. It should be noted that, when a difference between the terms is not emphasized, meanings to be expressed by the terms are consistent.

Seventh, in embodiments of this application, terms and English acronyms and abbreviations, such as radio resource control (RRC), are all examples provided for ease of description, and should not constitute any limitation on this application. This application does not exclude a possibility of defining, in an existing or future protocol, another term that can implement a same or similar function.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between associated objects.

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine-type communication (machine-type communication, MTC) system, an internet of things (internet of things, loT) communication system, or another communication system.

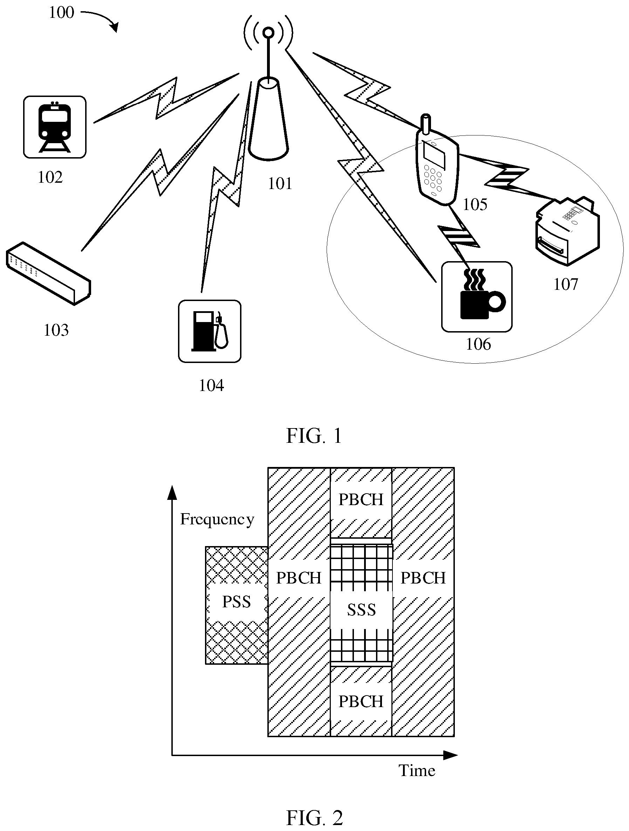

For ease of understanding of embodiments of this application, for example, a communication system to which this application is applicable is first described with reference to FIG. 1. A terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not merely a hardware device, but implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the wearable intelligent device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part in future development of information technology. A main technical feature of the IoT is to connect things to a network by using a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology.

In addition, in embodiments of this application, the terminal device may alternatively include a sensor, and main functions include collecting data (some terminal devices), receiving control information and downlink data from a network device, sending an electromagnetic wave, and transmitting uplink data to the network device.

A network device in embodiments of this application may be any communication device having a wireless transceiver function that is configured to communicate with the terminal device. The device includes but is not limited to: an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system. Alternatively, the device may be a gNB or a transmission point (TRP or TP) in a 5G system such as an NR system, or may be one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In different systems, a CU (or a CU-CP and a CU-UP), a DU, or an RU may have different names, but a person skilled in the art may understand meanings of the names. For example, the radio access network may be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The network device and the terminal device may be deployed on land, including indoors or outdoors, and in a hand-held manner or in a vehicle-mounted manner; may be deployed on water; or may be deployed on an airplane, a balloon, and a satellite in the air. Scenarios in which the network device and the terminal device are used are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium includes but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

For ease of understanding of embodiments of this application, the communication system to which embodiments of this application are applicable is first described in detail by using the communication system shown in FIG. 1 as an example. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device-to-device (device-to-device, D2D) technology. As shown in FIG. 1, direct communication may be implemented between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 via the terminal device 105.

A plurality of antennas may be configured for each communication device. For each communication device in the communication system 100, the plurality of antennas configured may include at least one transmit antenna configured to send a signal and at least one receive antenna configured to receive a signal. Therefore, the communication devices in the communication system 100 may communicate with each other by using a multi-antenna technology.

An interface between the network device and the terminal device may be a Uu interface (or referred to as an air interface). Certainly, in future communication, names of these interfaces may remain unchanged, or may be replaced with other names. This is not limited in this application. For example, communication between the network device and the terminal device complies with a specific protocol layer structure. Network layering means that operations of network nodes (for example, the network device and the terminal device) such as sending, forwarding, encapsulating, or decapsulating data, and adding or extracting control information are respectively performed by different hardware and software modules. In this way, a complex problem of communication and network interconnection can be simplified.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from a core network, data that needs to be sent to the terminal device.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF network element is a control plane network function provided by the operator network. In this embodiment of this application, when the communication system 100 includes the AF network element and the SMF network element, the AF network element may send service-related information to the network device via the SMF network element.

For ease of understanding of embodiments of this application, some basic concepts in this application are briefly described.
1. Synchronization signal/physical broadcast channel block (synchronization signal/PBCH block, SSB): In an NR system, during access to a base station, a terminal may perform time and frequency synchronization with the base station and obtain broadcast information through a synchronization signal/physical broadcast channel block.

Specifically, the SSB includes synchronization signals (synchronization signals) and a physical broadcast channel (physical broadcast channel, PBCH). The synchronization signals include a primary synchronization signal (primary synchronization signal, PSS) and a secondary synchronization signal (secondary synchronization signal, SSS). The terminal device may complete time and frequency synchronization with the base station through the PSS and the SSS, and obtain a physical-layer cell identity (physical-layer cell identity, PCI). The PBCH mainly carries the broadcast information, including a master information block (master information block, MIB) from a higher layer and timing-related information from a physical layer. The SSB may further be used for channel quality measurement, radio resource management (radio resource management, RRM) measurement, and radio link monitoring (radio link monitoring, RLM).

For example, physical time-frequency resources within an SSB is shown in the following Table 1:

**Table 1**

| Channel or signal (channel or signal) | Orthogonal frequency division multiplexing (orthogonal frequency division multiplexing, OFDM) symbol number relative to the start of an SS/PBCH block (OFDM symbol number relative to the start of an SS/PBCH block) | Subcarrier number relative to the start of an SS/PBCH block (Subcarrier number k relative to the start of an SS/PBCH block) |
|---|---|---|
| PSS | 0 | 56, 57, ..., 182 |
| SSS | 2 | 56, 57, ..., 182 |
| Set to 0 (set to 0) | 0 | 0, 1, ..., 55, 183, 184, ..., 239 |
| | 2 | 48, 49, ..., 55, 183, 184, ..., 191 |
| PBCH | 1, 3 | 0, 1, ..., 239 |
| | 2 | 0, 1, ..., 47, 192, 193, ..., 239 |
| Demodulation reference signal for PBCH (DM-RS for PBCH) | 1, 3 | 0+v, 4+v, 8+v, ..., 236+v |
| | 2 | 0+v, 4+v, 8+v, ..., 44+v, 192+v, 196+v, ..., 236+v |

In addition, for ease of understanding, a structure of an SSB is briefly described with reference to FIG. 2. As shown in FIG. 2, an SSB includes a PSS, an SSS, and a PBCH.

2. Time-domain position of an SSB: To improve coverage performance of the SSB, NR introduces a beam sweeping (beam sweeping) mechanism for SSB transmission. The base station repeatedly transmits the SSB in different directions on different beams. In a beam direction, a received power of the SSB at the terminal can be higher due to a higher concentration of energy, thereby improving the coverage performance of the SSB. For the foregoing beam-based SSB transmission process, time division multiplexing is performed between different SSB beams. In other words, the base station sends the SSB on different beams at different times. An SSB set in one beam sweep is referred to as a synchronization signal burst set (SS burst set).

Specifically, the NR protocol specifies that duration of an SS burst set is 5 ms, that is, transmission of all SSBs is completed within 5 ms. The 5 ms is a first half-frame or a second half-frame of a 10-ms system frame. In addition, the SS burst set is periodically transmitted in time domain. Periodic transmission of the SS burst set may also be considered as periodic transmission of each SSB in the SS burst set. Therefore, a periodicity of the SS burst set may also be considered as a periodicity of the SSB. In an initial access phase, the terminal assumes by default that the periodicity of the SS burst set is 20 ms.

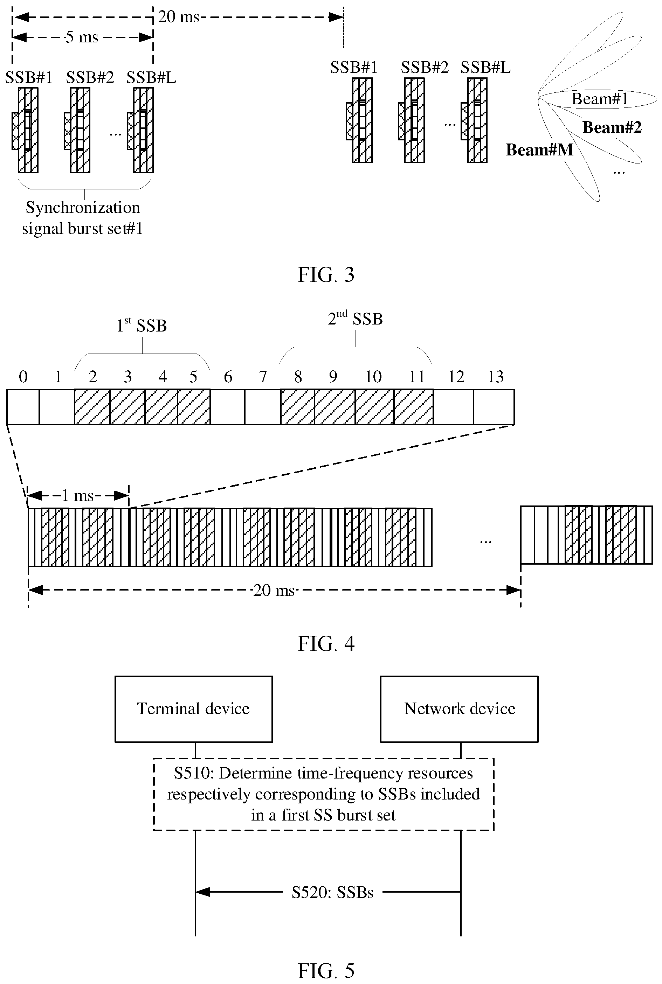

For ease of understanding, a beam sweeping-based SSB transmission process is briefly described with reference to FIG. 3. It can be learned from FIG. 3 that, an SS burst set (for example, a synchronization signal burst set#1 shown in FIG. 3) includes L SSBs (for example, an SSB#1, an SSB#2, ..., and an SSB#L shown in FIG. 3), transmission of the L SSBs is completed within 5 ms, and a periodicity of the SSBs is 20 ms (for example, a time interval between a 1^{st} SSB#1 and a 2^{nd} SSB#1 shown in FIG. 3 is 20 ms). In addition, it can be learned from FIG. 3 that the L SSBs included in the SS burst set are sent on M beams (for example, a beam#1, a beam#2, ..., and a beam#M shown in FIG. 3), where M and L are positive integers greater than 1.

3. Maximum quantity of SSBs: A maximum quantity of SSBs included in a synchronization signal burst set varies across different frequency bands. For frequency bands below 3 GHz, an SS burst set includes a maximum of four SSBs, and SSB beam sweeping is performed using a maximum of four beams. For frequency bands between 3 GHz and 6 GHz, an SS burst set includes a maximum of eight SSBs, and SSB beam sweeping is performed using a maximum of eight beams. For frequency bands above 6 GHz, for example, FR2, an SS burst set includes a maximum of 64 SSBs, and SSB beam sweeping is performed using a maximum of 64 beams.

In addition, time-domain positions of a plurality of SSBs in an SS burst set within 5 ms are predefined in a protocol, and are related to a subcarrier spacing (subcarrier spacing, SCS). For ease of understanding, candidate time-domain positions of SSBs in an SS burst set are briefly described with reference to FIG. 4. It can be learned from FIG. 4 that, for a frequency band between 3 GHz and 6 GHz, when an SCS is 15 kHz, positions (indexes of starting symbols, namely 1^{st} symbols) of eight SSBs are {2, 8}+14·n, where n=0, 1.

It should be noted that the foregoing quantity of SSBs is merely a maximum quantity of SSBs in an SS burst set. In practice, the base station may send a part or all of SSBs as required, and the sent SSBs are not required to be at consecutive candidate SSB positions. For example, for eight candidate SSB positions in FIG. 4, the base station may select any quantity of the eight candidate SSB positions for SSB transmission.

4. Frequency-domain position of an SSB: As defined in NR, all SSBs are located on a synchronization raster (synchronization raster). The synchronization raster defines candidate frequency positions of the SSBs. In an initial access phase, the terminal device may detect an SSB on the synchronization raster to perform cell search, to acquire time and frequency synchronization with a cell and detect a physical-layer cell identifier PCI of the cell.

For all frequencies, NR defines a global synchronization raster (global synchronization raster). A frequency position of an SSB is defined as SS_{REF} with a corresponding number, global synchronization channel number (global synchronization channel number, GSCN). Parameters defining SS_{REF} and GSCN for all the frequency ranges are shown in the following Table 2 or Table 3.

**Table 2: GSCN parameters for a global frequency raster**

| Frequency range (Frequency range) | Synchronization signal block frequency position (SS Block frequency position SS_{REF}) | GSCN | Range of GSCN (Range of GSCN) |
|---|---|---|---|
| 0-3000 MHz | N*1200 kHz+M*50 kHz, N=1:2499, Mε:{1,3,5} (Note 1) | 3N+(M-3)/2 | 2-7498 |
| 3000-24250 MHz | 3000 MHz+N*1.44 MHz, N=0:14756 | 7499+N | 7499-22255 |

**Table 3: GSCN parameters for a global frequency raster**

| Frequency range | SS block frequency position SS_{REF} | GSCN | Range of GSCN |
|---|---|---|---|
| 24250-100000 MHz | 24250.08 MHz+N*17.28 MHz, N=0:4383 | 22256+N | 22256-26639 |

A mapping between a synchronization raster and a corresponding resource element of an SSB is as follows: An RE whose index is 120 of the SSB is located on the synchronization raster.

It should be noted that the requirement for the SSB to be located on the synchronization raster mainly applies to a cell-defining SSB (cell-defining SSB, CD-SSB). Correspondingly, there is also a non-cell-defining SSB (non-cell-defining SSB, NCD-SSB). The CD-SSB is an SSB that can be used for cell search and access. Generally, the CD-SSB is associated with an SIB1. After receiving the SSB, the terminal may proceed to receive the associated SIB1, to perform cell camping, cell access, and the like. Therefore, the CD-SSB is required to be located on the synchronization raster. The NCD-SSB is generally used only for measurement rather than for cell search, cell access, or the like, and is not associated with an SIB1. Therefore, the NCD-SSB is not required to be located on the synchronization raster. The NCD-SSB may or may not be located on the synchronization raster, which generally depends on implementation by the base station.

5. Content of a PBCH: Higher-layer parameters of a PBCH in 5G are as follows:

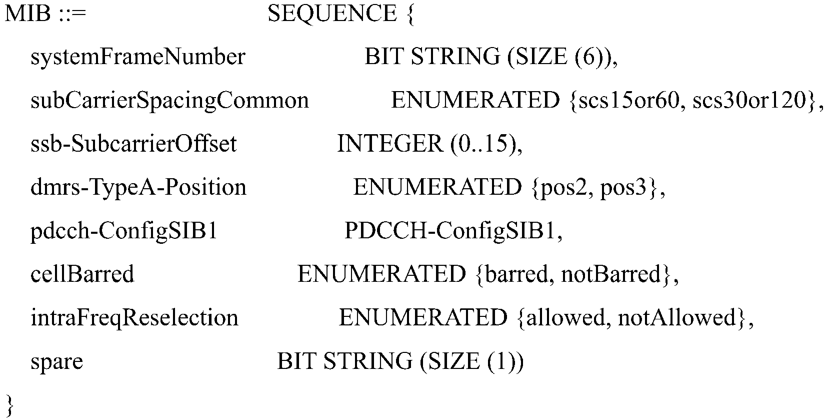

In addition, there are 9 additional bits in a payload (payload) of the PBCH, including 1 choice (choice) bit and 8 physical-layer bits. For a low-frequency system, first 4 bits are last 4 bits of a system frame number, a 5^{th} bit is a half-frame indicator, a 6^{th} bit is a last bit of Kssb, and 7^{th} and 8^{th} bits are reserved.

6. Expanding a quantity of SSBs: Higher frequencies may be used in subsequent communication protocols, and therefore enhanced coverage performance is required. For example, a 5G system and a future communication system may be deployed on a same frequency. More SSBs may be used for coverage in the future communication system, and SSB signals may also be deployed in the 5G system. Therefore, there may be a need to deploy two sets of SSB signals within a same frequency range.

The foregoing briefly describes, with reference to FIG. 1, the scenario to which a communication method provided in embodiments of this application is applicable, describes the basic concepts that may be involved in embodiments of this application, and describes the SSB transmission manner in the basic concepts, where transmission of a plurality of SSBs in an SS burst set is performed in a time division multiplexing manner.

The SSB transmission manner may have the following problems:
(1) At sub-6 GHz frequencies, an SS burst set includes a maximum of eight SSBs. However, at higher frequencies such as 6 GHz and the like, more broadcast beams are used for cell coverage, where each broadcast beam requires one SSB for access by UE. Therefore, eight SSBs are insufficient for broadcast coverage of a cell in mid-frequency bands.
(2) SSB signals are deployed independently for the 5G system and the future communication system respectively, which increases common overheads of a cell and is not conducive to improving spectrum utilization.

To resolve the foregoing problem of an insufficient quantity of SSBs, and to share SSB signals between the 5G system and the future communication system for reduced system overheads and improved spectrum utilization, this application provides a communication method. The communication method expands an existing quantity of SSBs in an SS burst set by performing frequency division multiplexing between different SSB beams in a same cell, that is, transmitting different SSB beams on different frequency resources.

It should be understood that the communication method provided in embodiments of this application may be applied to a system that performs communication using a multi-antenna technology, for example, the communication system 100 shown in FIG. 1. The communication system may include at least one network device and at least one terminal device.

It should be further understood that a specific structure of an entity for performing the method provided in embodiments of this application is not particularly limited in embodiments described below, provided that the entity can run a program that records code of the method provided in embodiments of this application to perform communication according to the method provided in embodiments of this application. For example, the entity for performing the method provided in embodiments of this application may be a terminal device, or may be a functional module that is in the terminal device and that can invoke and execute a program.

FIG. 5 is a schematic flowchart of a communication method according to an embodiment of this application. The communication method includes the following steps.

S510: A network device and a terminal device determine time-frequency resources respectively corresponding to a plurality of SSBs included in a first SS burst set.

Before transmission of the plurality of SSBs included in the first SS burst set, the network device and the terminal device may determine time-frequency resources respectively corresponding to the plurality of SSBs included in the first SS burst set, or the network device and the terminal device may learn of time-frequency resources to which the plurality of SSBs are respectively mapped (mapped).

It should be understood that the time-frequency resources respectively corresponding to the plurality of SSBs included in the first SS burst set may be predefined in a protocol or configured by a management device. For example, corresponding maximum quantities of SSBs that can be included in an SS burst set in different frequency bands are defined in the protocol, where time-domain positions of a plurality of SSBs in an SS burst set within 5 ms are predefined in the protocol, and are related to an SCS.

Specifically, the first SS burst set may be any SS burst set, the first SS burst set includes the plurality of SSBs, and each of the plurality of SSBs corresponds to one time-frequency resource. For example, for a frequency band between 3 GHz and 6 GHz, the first SS burst set includes 16 SSBs (for example, an SSB#0, an SSB#1, ..., an SSB#14, and an SSB#15). The 16 SSBs are in a one-to-one correspondence with 16 time-frequency resources (for example, the SSB#0 corresponds to a time-frequency resource#0, the SSB#1 corresponds to a time-frequency resource#1, ..., the SSB#14 corresponds to a time-frequency resource#14, and the SSB#15 corresponds to a time-frequency resource#15). For example, for frequency bands below 3 GHz, the first SS burst set includes 8 SSBs (for example, an SSB#0, an SSB#2, ..., an SSB#6, and an SSB#7). The 8 SSBs are in a one-to-one correspondence with 8 time-frequency resources (for example, the SSB#0 corresponds to a time-frequency resource#0, the SSB#0 corresponds to a time-frequency resource#1, ..., the SSB#6 corresponds to a time-frequency resource#6, and the SSB#7 corresponds to a time-frequency resource#7).

In this embodiment, that an SSB corresponds to a time-frequency resource may be understood as that the SSB is carried on the time-frequency resource, or that the SSB is transmitted on the time-frequency resource.

It should be understood that the time-frequency resource in this embodiment includes a time-domain resource and a frequency-domain resource. The time-domain resource may be a time unit that can represent a time-domain resource, for example, a slot, a symbol, or a frame. The frequency-domain resource may be a frequency-domain unit that can represent a frequency-domain resource, for example, a subcarrier.

In this embodiment, the first SS burst set includes a first SSB and a second SSB. The first SSB corresponds to a first time-frequency resource (or the first SSB is in a correspondence with a first time-frequency resource, or the first SSB is mapped (mapped) to a first time-frequency resource). The second SSB corresponds to a second time-frequency resource (or the second SSB is in a correspondence with a second time-frequency resource, or the second SSB is mapped to a second time-frequency resource). The first time-frequency resource includes a first time-domain resource and a first frequency-domain resource. The second time-frequency resource includes a second time-domain resource and a second frequency-domain resource. The first time-domain resource is the same as the second time-domain resource. The first frequency-domain resource is different from the second frequency-domain resource. That is, a plurality of SSBs may be sent on a same time-domain resource in a frequency division manner. Therefore, in this embodiment, different SSBs may be transmitted on different frequency-domain resources. This can expand a quantity of SSBs in an SS burst set beyond that of a case in which SSB transmission is performed only in a time division multiplexing manner.

For example, for frequency bands between 3 GHz and 6 GHz, when SSB transmission is performed in a time division multiplexing manner, an SS burst set includes a maximum of eight SSBs. If the time-frequency resource allocation scheme for SSBs in this embodiment is used and a plurality of SSBs may be sent on a same time-domain resource in a frequency division manner, for the frequency bands between 3 GHz and 6 GHz, an SS burst set includes a maximum of 8*n SSBs, where n is an integer greater than 1. For example, for a frequency band between 3 GHz and 6 GHz, the first SS burst set includes 16 SSBs, and positions (indexes of starting symbols, namely, 1^{st} symbols) of the 16 SSBs are {2, 8}+14·n, where n=0, 1, and two SSBs are on a same symbol.

Optionally, that the time-domain resource of the first time-frequency resource corresponding to the first SSB is the same as the time-domain resource of the second time-frequency resource corresponding to the second SSB may be: The time-domain resource of the first time-frequency resource and the time-domain resource of the second time-frequency resource are a first OFDM symbol in a first slot. In other words, the two SSBs may be on a same OFDM symbol. That one or more SSBs are on the first OFDM symbol may be understood as that the time-domain resource of the first time-frequency resource and the time-domain resource of the second time-frequency resource occupy one or more OFDM symbols, and the one or more OFDM symbols are collectively referred to as the first OFDM symbol.

It should be noted that the first SSB and the second SSB are merely an example and do not constitute any limitation on the protection scope of this application. That is, two or more SSBs in the first SS burst set are on a same OFDM symbol. For example, a time-domain resource of the time-frequency resource#1 corresponding to the SSB#1 other than the first SSB and the second SSB in the first SS burst set may also be the first OFDM symbol.

Optionally, DMRS sequences corresponding to the two or more SSBs in the first SS burst set that are on the same OFDM symbol are the same. For example, the first SSB includes a first physical broadcast channel PBCH, the second SSB includes a second PBCH, the first PBCH corresponds to a first demodulation reference signal DMRS sequence, the second PBCH corresponds to a second DMRS sequence, and the first DMRS sequence is the same as the second DMRS sequence.

For example, to distinguish between the two or more SSBs on the same OFDM symbol, one field in a PBCH of each of the two or more SSBs indicates the corresponding SSB. For example, the first SSB includes the first physical broadcast channel PBCH, the second SSB includes the second PBCH, the first PBCH includes first indication information, the second PBCH includes second indication information, the first indication information indicates the first SSB, and the second indication information indicates the second SSB.

Optionally, the first indication information includes a first index, the first index indicates the first SSB, the second indication information includes a second index, and the second index indicates the second SSB.

By way of example and not limitation, the first indication information is indicated by a first bit in the first PBCH, the second indication information is indicated by a second bit in the second PBCH, a value of the first bit is different from a value of the second bit, the first bit includes at least one bit, and the second bit includes at least one bit. For example, the first bit includes X bits, and the second bit includes X bits. For another example, the first bit is 1 bit, and the second bit is 1 bit. The value of the first bit is 0, and the value of the second bit is 1; or the value of the first bit is 1, and the value of the second bit is 0; or the value of the first bit is A, and the value of the second bit is 1-A.

Optionally, the first bit is in a first field in the first PBCH, the second bit is in a second field in the second PBCH, the first field includes a choice (choice) field or a reserved field of the first PBCH, and the second field includes a choice field or a reserved field of the second PBCH. The reserved field includes spare (spare) or reserved (reserved).

Further, the first SS burst set further includes a third SSB and a fourth SSB. The third SSB corresponds to a third time-frequency resource. The fourth SSB corresponds to a fourth time-frequency resource. The third time-frequency resource includes a third time-domain resource and a third frequency-domain resource. The fourth time-frequency resource includes a fourth time-domain resource and a fourth frequency-domain resource. The third time-domain resource is the same as the fourth time-domain resource. The third frequency-domain resource is different from the fourth frequency-domain resource. The third time-domain resource is a second OFDM symbol, and the second orthogonal frequency division multiplexing symbol is in the first slot.

It should be understood that, in this embodiment, the first SS burst set may further include an SSB other than the first SSB, the second SSB, the third SSB, or the fourth SSB. For example, the first SS burst set includes 16 SSBs, every four SSBs of the 16 SSBs are in one slot, and SSBs in different slots are different.

For ease of understanding, the following describes, with reference to a specific example, that the SSBs included in the first SS burst set broadcast by the network device are carried on different time-frequency resources.

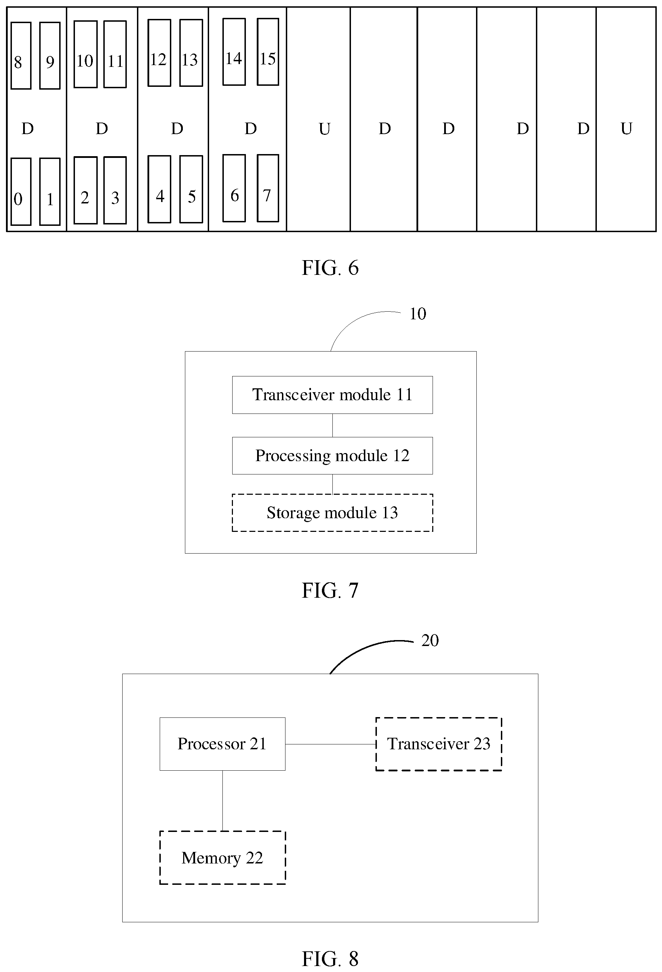

As shown in FIG. 6, resource allocation, in a TDD period, for the first SS burst set broadcast by the network device is as follows: In time domain, the 16 SSBs included in the first SS burst set are sent in four downlink slots, and there are four SSBs in each downlink slot. The 16 SSB bursts are numbered from 0 to 15. The SSBs numbered 0, 1, 8, and 9 are in a 1^{st} downlink slot, the SSBs numbered 2, 3, 10, and 11 are in a 2^{nd} downlink slot, the SSBs numbered 4, 5, 12, and 13 are in a 3^{rd} downlink slot, and the SSBs numbered 6, 7, 14, and 15 are in a 4^{th} downlink slot.

The SSBs numbered 0 and 8 in the 1^{st} downlink slot are at a same time-domain position. The SSBs numbered 1 and 9 in the 1^{st} downlink slot are at a same time-domain position. The SSBs numbered 2 and 10 in the 2^{nd} downlink slot are at a same time-domain position. The SSBs numbered 3 and 11 in the 2^{nd} downlink slot are at a same time-domain position. The SSBs numbered 4 and 12 in the 3^{rd} downlink slot are at a same time-domain position. The SSBs numbered 5 and 13 in the 3^{rd} downlink slot are at a same time-domain position. The SSBs numbered 6 and 14 in the 4^{th} downlink slot are at a same time-domain position. The SSBs numbered 7 and 15 in the 4^{th} downlink slot are at a same time-domain position. It may be understood as that two SSBs with a number difference of 8 in a same downlink slot are on a same OFDM symbol.

It should be understood that the resource configuration shown in FIG. 6 is merely an example and does not constitute any limitation on the protection scope of this application. For example, SSBs numbered n, n+1, n+8, and n+9 are in a same slot, where n is an integer. For another example, two SSBs with a number difference of 16 may be on a same OFDM symbol in a same slot. For another example, a slot that the SSB is in may be another slot (for example, a flexible slot or an uplink slot) other than the downlink slot shown in FIG. 6.

S520: The network device sends the plurality of SSBs to the terminal device, and correspondingly, the terminal device receives the plurality of SSBs from the network device.

Specifically, the network device may send the plurality of SSBs to the terminal device on the time-frequency resources respectively corresponding to the plurality of SSBs, and correspondingly, the terminal device may receive the plurality of SSBs from the network device on the time-frequency resources respectively corresponding to the plurality of SSBs. In other words, after determining, in the manner shown in step S510, the time-frequency resources respectively corresponding to the plurality of SSBs in the first SS burst set, the network device and the terminal device may perform SSB transmission on the determined time-frequency resources.

For example, the network device sends the first SSB on the first time-frequency resource, and the terminal device receives the first SSB on the first time-frequency resource. For another example, the network device sends the second SSB on the second time-frequency resource, and the terminal device receives the second SSB on the second time-frequency resource. For another example, the network device sends the third SSB on the third time-frequency resource, and the terminal device receives the third SSB on the third time-frequency resource. For another example, the network device sends the fourth SSB on the fourth time-frequency resource, and the terminal device receives the fourth SSB on the fourth time-frequency resource.

For example, the network device may send the plurality of SSBs in the first SS burst set in different directions on a plurality of beams. For an actual process and manner in which the network device sends the SSBs, no limitation is imposed in this embodiment, and reference may be made to descriptions, in a current related technology, of the network device sending an SSB after determining a time-frequency resource corresponding to the SSB. Details are not described herein.

In the communication method shown in FIG. 5, time-frequency resource positions and a quantity of SSBs in an expanded SS burst set are defined, thereby providing more SSBs and increasing a quantity of SSBs in a cell. As a result, synchronization resources can be provided for more broadcast beams, thereby achieving an enhanced cell coverage capability. In addition, SSBs in a same SS burst set that are at a same time-domain position are distinguished by values of fields in PBCHs, so that a terminal device can identify the SSBs. For example, when a 5G terminal device and a terminal device in a future communication system share a spectrum, the 5G terminal device and the terminal device in the future communication system can identify SSBs based on values of fields in PBCHs and determine corresponding deployed SSBs (for example, the 5G terminal device corresponds to an SSB in which a value of a field in a PBCH is A, and the terminal device in the future communication system corresponds to an SSB in which a value of a field in a PBCH is 1-A), thereby eliminating a need to deploy respective SSB signals. This reduces common overheads of a cell, and improves spectrum utilization.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, devices in a conventional network architecture (for example, a network device and a terminal device) are mainly used as an example for description. It should be understood that specific forms of the devices are not limited in embodiments of this application. For example, all devices that can implement a same function in the future are applicable to embodiments of this application.

It may be understood that, in the foregoing method embodiments, the method and operations implemented by a device (for example, the network device or the terminal device) may alternatively be implemented by a component (for example, a chip or a circuit) of the device.

The foregoing describes in detail, with reference to FIG. 5, the communication method provided in embodiments of this application. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art should be aware that, in this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

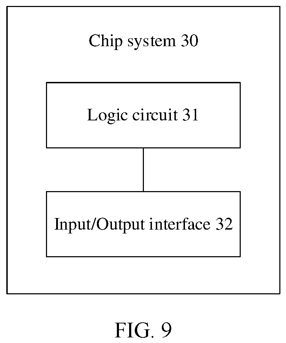

The following describes in detail a communication apparatus provided in this application with reference to FIG. 7 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of software functional module. It should be noted that, in embodiments of this application, division into the modules is an example, and is merely logical function division. In actual implementation, another division manner may be used. The following provides descriptions by using an example in which each functional module is obtained through division based on each function.

FIG. 7 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving-related and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform receiving-related and sending-related operations of the terminal device in the foregoing method embodiments, and the processing module 12 may be configured to perform a processing-related operation of the terminal device in the foregoing method embodiments.

In a possible implementation, the transceiver module 11 is configured to receive a first synchronization signal/physical broadcast channel block SSB on a first time-frequency resource; and the transceiver module 11 is configured to receive a second SSB on a second time-frequency resource, where the first SSB and the second SSB belong to a first synchronization signal SS burst set, the first time-frequency resource includes a first time-domain resource and a first frequency-domain resource, the second time-frequency resource includes a second time-domain resource and a second frequency-domain resource, the first time-domain resource is the same as the second time-domain resource, and the first frequency-domain resource is different from the second frequency-domain resource.

When the apparatus 10 is configured to perform the method in FIG. 5, the transceiver module 11 may be configured to perform steps of receiving and sending information in the method, for example, step S520, and the processing module 12 may be configured to perform a processing step in the method, for example, step S510.

It should be understood that a specific process in which the units perform the foregoing corresponding steps is described in detail in the foregoing method embodiments. For brevity, details are not described herein again.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform receiving-related and sending-related operations of the network device in the foregoing method embodiments, and the processing module 12 may be configured to perform a processing-related operation of the network device in the foregoing method embodiments.

In a possible implementation, the transceiver module 11 is configured to send a first synchronization signal/physical broadcast channel block SSB on a first time-frequency resource; and the transceiver module 11 is configured to send a second SSB on a second time-frequency resource, where the first SSB and the second SSB belong to a first synchronization signal SS burst set, the first time-frequency resource includes a first time-domain resource and a first frequency-domain resource, the second time-frequency resource includes a second time-domain resource and a second frequency-domain resource, the first time-domain resource is the same as the second time-domain resource, and the first frequency-domain resource is different from the second frequency-domain resource.

When the apparatus 10 is configured to perform the method in FIG. 5, the transceiver module 11 may be configured to perform steps of receiving and sending information in the method, for example, step S520, and the processing module 12 may be configured to perform a processing step in the method, for example, step S510.

It should be understood that a specific process in which the units perform the foregoing corresponding steps is described in detail in the foregoing method embodiments. For brevity, details are not described herein again.

It should be further understood that the apparatus 10 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing method. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 8 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 8, the apparatus 20 further includes the memory 22, and the memory 22 is configured to store the computer program or the instructions, and/or the data. The memory 22 and the processor 21 may be integrated together, or may be disposed separately. Optionally, there are one or more memories 22.

Optionally, as shown in FIG. 8, the apparatus 20 further includes a transceiver 23, and the transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any other appropriate type of memory.

FIG. 9 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the method and functions in embodiments of this application. The input/output interface 32 may be an input/output circuit in the chip system 30, and may output information processed by the chip system 30, or input to-be-processed data or signaling information to the chip system 30 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, and the input/output interface 32 is configured to implement sending-related and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when the computer instructions are executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

A person of ordinary skill in the art may be aware that, the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a storage medium, and includes several instructions for enabling a compute device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first synchronization signal/physical broadcast channel block SSB on a first time-frequency resource; and
sending a second SSB on a second time-frequency resource, wherein
the first SSB and the second SSB belong to a first synchronization signal SS burst set, the first time-frequency resource comprises a first time-domain resource and a first frequency-domain resource, the second time-frequency resource comprises a second time-domain resource and a second frequency-domain resource, the first time-domain resource is the same as the second time-domain resource, and the first frequency-domain resource is different from the second frequency-domain resource.

2. The method according to claim 1, wherein the method further comprises:
sending a third SSB on a third time-frequency resource; and
sending a fourth SSB on a fourth time-frequency resource, wherein
the third SSB and the fourth SSB belong to the first synchronization signal burst set, the third time-frequency resource comprises a third time-domain resource and a third frequency-domain resource, the fourth time-frequency resource comprises a fourth time-domain resource and a fourth frequency-domain resource, the third time-domain resource is the same as the fourth time-domain resource, and the third frequency-domain resource is different from the fourth frequency-domain resource.

3. The method according to claim 1 or 2, wherein the first time-domain resource is a first orthogonal frequency division multiplexing OFDM symbol, and the first orthogonal frequency division multiplexing symbol is in a first slot.

4. The method according to claim 3, wherein the third time-domain resource is a second orthogonal frequency division multiplexing symbol, and the second orthogonal frequency division multiplexing symbol is in the first slot.

5. The method according to any one of claims 1 to 4, wherein the first SSB comprises a first physical broadcast channel PBCH, the second SSB comprises a second PBCH, the first PBCH corresponds to a first demodulation reference signal DMRS sequence, the second PBCH corresponds to a second DMRS sequence, and the first DMRS sequence is the same as the second DMRS sequence.

6. The method according to any one of claims 1 to 5, wherein the first SSB comprises the first physical broadcast channel PBCH, the second SSB comprises the second PBCH, the first PBCH comprises first indication information, the second PBCH comprises second indication information, the first indication information indicates the first SSB, and the second indication information indicates the second SSB.

7. The method according to claim 6, wherein the first indication information comprises a first index, the first index indicates the first SSB, the second indication information comprises a second index, and the second index indicates the second SSB.

8. The method according to claim 7, wherein the first indication information is indicated by a first bit in the first PBCH, the second indication information is indicated by a second bit in the second PBCH, a value of the first bit is different from a value of the second bit, the first bit comprises at least one bit, and the second bit comprises at least one bit.

9. The method according to claim 8, wherein the first bit is in a first field in the first PBCH, the second bit is in a second field in the second PBCH, the first field comprises a choice field or a reserved field of the first PBCH, and the second field comprises a choice field or a reserved field of the second PBCH.

10. A communication method, comprising:
receiving a first synchronization signal/physical broadcast channel block SSB on a first time-frequency resource; and
receiving a second SSB on a second time-frequency resource, wherein
the first SSB and the second SSB belong to a first synchronization signal SS burst set, the first time-frequency resource comprises a first time-domain resource and a first frequency-domain resource, the second time-frequency resource comprises a second time-domain resource and a second frequency-domain resource, the first time-domain resource is the same as the second time-domain resource, and the first frequency-domain resource is different from the second frequency-domain resource.

11. The method according to claim 10, wherein the method further comprises:
receiving a third SSB on a third time-frequency resource; and
receiving a fourth SSB on a fourth time-frequency resource, wherein
the third SSB and the fourth SSB belong to the first synchronization signal burst set, the third time-frequency resource comprises a third time-domain resource and a third frequency-domain resource, the fourth time-frequency resource comprises a fourth time-domain resource and a fourth frequency-domain resource, the third time-domain resource is the same as the fourth time-domain resource, and the third frequency-domain resource is different from the fourth frequency-domain resource.

12. The method according to claim 10 or 11, wherein the first time-domain resource is a first orthogonal frequency division multiplexing OFDM symbol, and the first orthogonal frequency division multiplexing symbol is in a first slot.

13. The method according to claim 12, wherein the third time-domain resource is a second orthogonal frequency division multiplexing OFDM symbol, and the second orthogonal frequency division multiplexing symbol is in the first slot.

14. The method according to any one of claims 10 to 13, wherein the first SSB comprises a first physical broadcast channel PBCH, the second SSB comprises a second PBCH, the first PBCH corresponds to a first demodulation reference signal DMRS sequence, the second PBCH corresponds to a second DMRS sequence, and the first DMRS sequence is the same as the second DMRS sequence.

15. The method according to any one of claims 10 to 14, wherein the first SSB comprises the first physical broadcast channel PBCH, the second SSB comprises the second PBCH, the first PBCH comprises first indication information, the second PBCH comprises second indication information, the first indication information indicates the first SSB, and the second indication information indicates the second SSB.

16. The method according to claim 15, wherein the first indication information comprises a first index, the first index indicates the first SSB, the second indication information comprises a second index, and the second index indicates the second SSB.

17. The method according to claim 16, wherein the first indication information is indicated by a first bit in the first PBCH, the second indication information is indicated by a second bit in the second PBCH, a value of the first bit is different from a value of the second bit, the first bit comprises at least one bit, and the second bit comprises at least one bit.

18. The method according to claim 17, wherein the first bit is in a first field in the first PBCH, the second bit is in a second field in the second PBCH, the first field comprises a choice field or a reserved field of the first PBCH, and the second field comprises a choice field or a reserved field of the second PBCH.

19. A communication apparatus, comprising modules that are configured to implement the method according to any one of claims 1 to 9.

20. The communication apparatus according to claim 19, wherein the communication apparatus comprises a network device or a chip.

21. A communication apparatus, comprising modules that are configured to implement the method according to any one of claims 10 to 18.

22. The communication apparatus according to claim 21, wherein the communication apparatus comprises a terminal device or a chip.

23. A computer-readable storage medium, wherein the computer-readable storage medium stores computer instructions, and when the computer instructions are executed, the method according to any one of claims 1 to 18 is performed.

24. A computer program, wherein when the computer program is run, the method according to any one of claims 1 to 18 is performed.
